# EUROPEAN PATENT APPLICATION

(11) **EP 1 441 346 A2**
(43) Date of publication of application: **28.07.2004**
(21) Application number: 04250419.1
(22) Date of filing: 27.01.2004
(51) Int. Cl.: G11B 20/18

(54) **Information recording/reproducing apparatus, program, computer-readable recording medium, and defect field management method**

(30) Priority: 27.01.2003 JP 2003017644; 05.09.2003 JP 2003314434
(71) Applicant: Ricoh Company Ltd., Tokyo 143-8555 (JP)
(72) Inventor: Motohashi, Tsutomu, Komae-shi Tokyo (JP)
(74) Representative: Mounteney, Simon James

(57) **Abstract**

An information recording/reproducing apparatus (100) performs reading and writing of information with respect to an information recording medium (1) in which user data areas and alternative areas are alternately arranged. The apparatus (100) includes means for assigning, when an error occurs in a certify process or a verify process and an alternative destination is to be assigned, in the case where an unused field does not exist in the alternative area corresponding to the user data area in which the error occurs, the alternative destination in another alternate area on which the certify process or the verify process is performed.

## Description

### BACKGROUND OF THE INVENTION

### 1. Field of the Invention

The present invention generally relates to information recording/reproducing apparatuses such as CD-RW drives, DVD+RW drives, DVD-RW drives, and DVD-RAM drives that perform reading and writing with respect to rewritable information recording media such as CD-RW disks, DVD+RW disks, DVD-RW disks, and DVD-RAM disks, and to programs to be carried out by computers, and to computer-readable recording media recording the programs, and to defect field management methods applied to the information recording/reproducing apparatuses.

### 2. Description of the Related Art

Currently, the standard of common format for CD-RW (Compact Disk Re-writable) is being discussed. The standard is called CD-Mount Rainier (CD-MRW). In the CD-Mount Rainier, the recording area of an information recording medium (optical disk) is divided into a plurality of areas, and the areas are provided with respective alternative areas. Among the areas, those areas in which user data are written are called Data Areas (DA), and the alternative areas are called Spare Areas (SA). Normally, when replacing a block (a block refers to a minimum writing unit of an optical disk) of a DA in which block an error occurs, the block is replaced with a block of an SA that immediately precedes the DA.

On this occasion, an alternative destination for the block of the DA in which block the error occurs is assigned in the SA. In addition, those blocks of the SA in which errors occur are nonusable (the use of the blocks is prohibited) and not assigned as alternative destinations. At the time of a certify process (writing), the errors include seek errors, servo shift during writing, and the like. At the time of a verify process (reading), the errors include seek errors, servo shift during reading, irrecoverable errors, an error rate of a rated value or more, and the like. However, the number of blocks that can be registered in a SA is less than the number of blocks of a DA. Thus, in a case where a lot of errors occur in the same DA and all blocks of a SA are used, replacement is performed on another SA. In this case, normally, the replacement is performed on a block of an SA behind (an SA behind the SA whose blocks are all used).

A format process carried out before using an optical disk is conducted as follows: the "certify" process that writes data of a specific pattern is carried out, thereby confirming that data can be normally written, and thereafter, the "verify" process is carried out in ascending order of address, which verify process confirms that the data written in the certify process can be normally read. In the verify process, reproduction is performed by making a defect detection condition more strict than that in a normal reproduction process (for example, the number of times of error correction is reduced, or the block error rate (BLER) is checked strictly).

Additionally, sometimes, the verify process is performed with respect to a recording area at the time of recording of user data, which is not a part of the format process. Accordingly, hereinafter, recording of user data refers to both normal user data recording and the verify process with respect to a user data recording area, unless stated to the contrary.

Conventional information recording/reproducing apparatuses can perform writing before the format process. In an optical disk, data tracks and spare tracks are arranged alternately, and replacement is performed on a track that is close to the defect (refer to Japanese Laid-Open Patent Application No. 10-92116, for example).

With the conventional information recording/reproducing apparatuses, however, in the case where all blocks of a SA are used and a SA behind is used as mentioned above, since the backward SA is not subjected to the format process, there is a probability of an error occurring in the format process. When an error occurs in a SA, the block in which the error occurs is registered as a block the use of which is prohibited (a nonusable block), and another alternative destination is assigned. As mentioned above, when writing is performed before the format process and replacement occurs, since a defect check of the alternative destination is not conducted, there is a probability of an error occurring and replacement being performed again, which is a problem in that the format process speed is reduced.

### SUMMARY OF THE INVENTION

A general object of the present invention is to provide an improved and useful information recording/reproducing apparatus, program, computer-readable recording medium, and defect field management method in which the above-mentioned problem is eliminated.

Another and more specific object of the present invention is to prevent occurrence of a process for replacing again an alternative destination in a rewritable information recording medium.

In order to achieve the above-mentioned objects, according to One aspect of the present invention, there is provided an information recording/reproducing apparatus that performs reading and writing of information with respect to an information recording medium in which user data areas and alternative areas are alternately arranged, the apparatus including:
means for assigning, when an error occurs in a certify process or a verify process and an alternative destination is to be assigned, in the case where an unused field does not exist in the alternative area corresponding to the user data area in which the error occurs, the alternative destination in another alternate area on which the certify process or the verify process is performed.

Additionally, according to another aspect of the present invention, there is provided an information recording/reproducing apparatus that performs recording and reproducing of information with respect to a recording medium having a plurality of user data areas for recording user data therein and a plurality of alternative areas corresponding to the respective user data areas and each having an alternative field for replacing a defect field in the user data areas, the apparatus including:
a defect field detection part that detects a defect field at the time of a format process or recording of information;
a first usable field determination part that determines whether an alternative field allowing replacement exists in the alternative area corresponding to the user data area including the defect field detected by the defect field detection part; and
a first alternative field assigning part that, when the first usable field determination part determines that the alternative field does not exist, assigns, as an alternative field for the defect field, an alternative field allowing replacement in another alternative area to which the format process is performed.

Additionally, according to another aspect of the present invention, there is provided an information recording/reproducing apparatus that performs recording and reproducing of information with respect to a recording medium having a plurality of user data areas for recording user data therein and a plurality of alternative areas corresponding to the respective user data areas and each having an alternative field for replacing a defect field in the user data areas, the apparatus including:
an alternative area format process part that performs a format process on the alternative areas separately from the user data areas;
a defect field detection part that detects a defect field existing in the alternative area at the time of the format process by the alternative area format process part; and
a use prohibition part that prohibits, when the defect field is detected by the defect field detection part, using the defect field as the alternative field.

Additionally, according to another aspect of the present invention, there is provided an information recording/reproducing apparatus that performs recording and reproducing of information with respect to a recording medium having a plurality of user data areas for recording user data therein and a plurality of alternative areas corresponding to the respective user data areas and each having an alternative field for replacing a defect field in the user data areas, the apparatus including:
an error detection part that detects an error that occurs at the time of a format process;
a usable field determination part that determines whether a field allowing replacement exists in the alternative area corresponding to the user data area in which the error detected by the error detection part occurs;
an error occurrence position information maintaining part that maintains, when the usable field determination part determines that the field allowing replacement does not exist, information relating to the position at which the error occurs; and
an alternative field assigning part that assigns, after the format process ends, an alternative field for replacing the defect field based on the information maintained by the error occurrence position information maintaining part.

Additionally, according to another aspect of the present invention, there is provided a program for causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
a defect field detection procedure that detects the defect field at the time of recording of information or a format process;
a first usable field determination procedure that determines whether an alternative field allowing replacement exists in the alternative area corresponding to the user data area having the defect field detected in the defect field detection procedure; and
a first alternative field assigning procedure that assigns, when the first usable field determination procedure determines that the alternative field does not exist, an alternative field allowing replacement in another alternative area to which the format process is performed as an alternative field for the defect field.

Additionally, according to another aspect of the present invention, there is provided a computer-readable recording medium storing the above-mentioned program.

Additionally, according to another aspect of the present invention, there is provided a program for causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
an alternative area format process procedure that performs a format process on the alternative areas separately from the user data areas;
a defect field detection procedure that detects, at the time of the format process in the alternative area format process procedure, a defect field existing in the alternative areas; and
a use prohibition procedure that prohibits, when the defect field is detected in the defect field detection procedure, use of the defect field as an alternative field.

Additionally, according to another aspect of the present invention, there is provided a computer-readable program storing the above-mentioned program.

Additionally, according to another aspect of the present invention, there is provided a program for causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
an error detection procedure that detects an error that occurs at the time of a format process;
a usable field determination procedure that determines whether an alternative field allowing replacement exists in the alternative area corresponding to the user data area in which the error detected in the error detection procedure occurs;
an error occurrence position information maintaining procedure that maintains, when the usable field determination procedure determines that the alternative area does not exist, information relating to the position at which the error occurs; and
an alternative area assigning procedure that assigns, after the format process ends, an alternative field for replacing the detect field based on the information maintained in the error occurrence position information maintaining procedure.

Additionally, according to another aspect of the present invention, there is provided a computer-readable recording medium storing the above-mentioned program.

Additionally, according to another aspect of the present invention, there is provided a defect field management method of managing an alternative field with respect to a recording medium having a plurality of user data areas for recording user data therein and a plurality of alternative areas corresponding to the respective user data areas and each having an alternative field for replacing the defect field in the user data areas, the method including the steps of:
detecting the defect field at the time of recording of information or a format process;
determining whether an alternative field allowing replacement exists in the alternative area corresponding to the user data area having the detected defect field; and
assigning, when the step of determining determines that the alternative field allowing replacement does not exist, an alternative field allowing replacement in another alternative area to which the format process is performed as an alternative field for the defect field.

Additionally, according to another aspect of the present invention, there is provided a defect field management method of managing an alternative field with respect to a recording medium having a plurality of user data areas for recording user data therein and a plurality of alternative areas corresponding to the respective user data areas and each having an alternative field for replacing the defect field in the user data areas, the method including the steps of:
performing a format process on the alternative areas separately from the user data areas;
detecting, at the time of the format process in the step of performing the format process, a defect field existing in the alternative areas; and
prohibiting use of the detected defect field as the alternative field.

Additionally, according to another aspect of the present invention, there is provided a defect field management method of managing an alternative field with respect to a recording medium having a plurality of user data areas for recording user data therein and a plurality of alternative areas corresponding to the respective user data areas and each having an alternative field for replacing the defect field in the user data areas, the method including the steps of:
detecting an error that occurs at the time of a format process;
determining whether an alternative field allowing replacement exists in the alternative area corresponding to the user data area in which the detected error occurs;
maintaining, when the step of determining determines that the alternative field allowing replacement does not exist, information relating to the position at which the error occurs; and
assigning, after the format process ends, an alternative field for replacing the defect field based on the information maintained in the step of maintaining the information.

According to the present invention, occurrence of the process for replacing again an alternative destination in a rewritable information recording medium is prevented. Hence, it is possible to prevent reduction in format process speed.

Other objects, features and advantages of the present invention will become more apparent from the following detailed description when read in conjunction with the following drawings.

### BRIEF DESCRIPTION OF THE DRAWINGS

FIG. 1 is a block diagram showing a configuration of an information recording/reproducing apparatus according to one embodiment of the present invention;
FIG. 2 is a data diagram showing the positional relationship between SAs and DAs in the CD-MRW standard;
FIG. 3 is a table showing a management example of alternative information of an alternative destination in an optical disk;
FIG. 4 is a flow chart showing a first process according to the present invention in the information recording/reproducing apparatus shown in FIG. 1;
FIG. 5 is a flow chart showing a second process according to the present invention in the information recording/reproducing apparatus shown in FIG. 1;
FIG. 6 is a flow chart showing a third process according to the present invention in the information recording/reproducing apparatus shown in FIG. 1; and
FIG. 7 is a flow chart showing a fourth process according to the present invention in the information recording/reproducing apparatus shown in FIG. 1.

### DETAILED DESCRIPTION OF THE PREFERRED EMBODIMENTS

A specific description is given below of the best mode for carrying out the present invention.

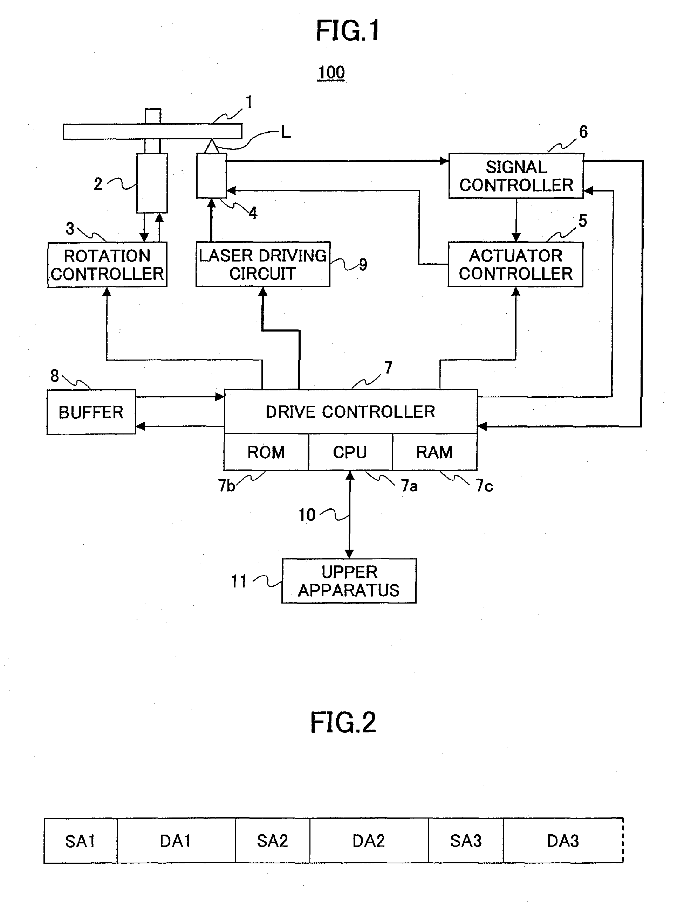

FIG. 1 is a block diagram showing the configuration of an information recording/reproducing apparatus 100 according to one embodiment of the present invention.

The information recording/reproducing apparatus 100 is an information recording/reproducing apparatus such as a CD-RW drive, a DVD+RW drive, a DVD-RW drive, or a DVD-RAM drive that performs reading and writing of information with respect to an optical disk 1 that is a rewritable information recording medium such as a CD-RW disk, a DVD+RW disk, a DVD-RW disk, or a DVD-RAM disk.

A spindle motor (motor) 2 is a motor that rotates the optical disk 1 at the time of data recording and data reproducing at respective predetermined rotational speeds. A rotation controller 3 performs rotation control of the motor 2. An optical pickup 4 is an apparatus that emits a laser beam L and illuminates the optical disk 1 when recording data on the optical disk 1 and reproducing data from the optical disk 1 at respective predetermined power levels. An actuator controller 5 controls the movement of the optical pickup apparatus 4 for focusing and tracking with respect to the optical disk 1. A signal controller 6 controls a reproduced signal that is output from the optical pickup 4 and a recording signal that is output to the optical pickup 4.
A drive controller 7 is realized by a microcomputer formed by a CPU 7a, a ROM 7b, a RAM 7c, and the like. The drive controller 7 controls the information recording/reproducing apparatus 100 and also carries out various control processes according to the present invention. That is, the CPU 7a carries out the various control processes according to the present invention and the like in accordance with a control program stored in the ROM 7b. In addition, the CPU 7a obtains address information (absolute time and addresses) recorded in advance on the optical disk 1 at the time of fabrication thereof and detected by the optical pickup 4, and address information recorded in subcodes and headers of user data. Further, the CPU 7a can specify a data block based on the obtained address information.

A buffer 8 is a memory used by the drive controller 7 as a temporary storage area for storing data, for example. A laser drive circuit 9 drives the optical pickup 4 to emit the laser beam L. An external interface 10 is used for transmitting/receiving commands, data, and the like to/from an upper apparatus 11. The upper apparatus 11 is a host computer such as a personal computer that controls the information recording/reproducing apparatus 100.

That is, the drive controller 7 (mainly, the CPU 7a) serves as means for performing reading and writing of information with respect to an information recording medium in which user data areas and alternative areas are alternately arranged, and, when an error occurs at the time of the certify process or the verify process and an alternative destination is to be assigned, in the case where an unused field does not exist in the alternative area corresponding to the user data area in which the error occurs, assigning the alternative destination in an alternative area on which the certify process or the verify process is completed.

Additionally, when an error occurs at the time of the certify process or the verify process and an alternative destination is to be assigned, in the case where the certify process and the verify process are not performed in an alternative area having the alternative destination, the drive controller 7 (mainly, the CPU 7a) also serves as means for performing the certify process and the verify process of the alternative area having the alternative destination, and, when an error occurs in the certify process or the verify process performed by the above-mentioned means, assigning the alternative destination in an alternative area other than the alternative area in which the error occurs.

Further, the drive controller 7 also serves as means for first performing the certify process and the verify process on the alternative area before the user data area, and means for registering the position of the alternative area in which an error occurs in the certify process or the verify process performed by the above-mentioned means as a position the use of which is prohibited (a nonusable position). In addition, the drive controller 7 also serves as means for maintaining the position at which the error occurs when the certify process or the verify process of the user data area is performed, and means for assigning, after the certify process and the verify process of the alternative area end, an alternative destination for the user data area having the position maintained.

Next, a description is given below of the positional relationship between alternative areas (Spare Areas: SA) and Data Areas (DA) in the CD-Mount Rainier (CD-MRW) standard.

FIG. 2 is a data diagram showing the positional relationship between the SAs and the DAs in the CD-MRW standard. In the program area on the optical disk 1, the SAs and the DAs are arranged alternately. It should be noted that, in addition to the program area, the optical disk 1 is provided with, as recording areas, a lead-in area and a lead-out area where various management information items are recorded. The DA consists of 136 packets, and the SA consists of 8 packets. Here, one packet contains 32 blocks (user data blocks), and one block contains 2048 bytes.

Normally, when replacing a block (hereinafter referred to as an "error block") in a DA in which block an error occurs with a block of an SA, the drive controller 7 (CPU 7a) uses the SA immediately preceding the DA. For example, an SA1 is used when assigning an alternative destination for an error block in a DA1. Accordingly, since an SA is arranged before a DA, the SA is subjected to the certify process and the verify process before the DA.

A description is given below of alternative information of an alternative destination.

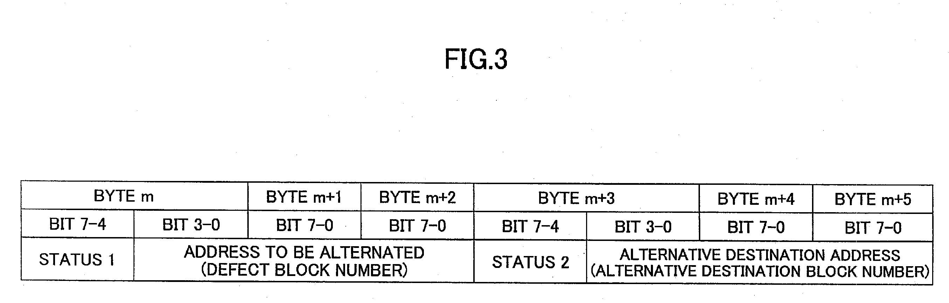

FIG. 3 is a table showing a management example of alternative information of an alternative destination. The table shown in the management example is recorded in a Main Table Area (MTA) in the lead-in area and in a Secondary Table Area (STA) that is in the program area and is adjacent to the lead-out area.

The table information described in this management example is read and stored in the RAM 7c by the CPU 7a, prior to recording or reproduction of user data by the information recording/reproducing apparatus 100 of this embodiment. This operation is performed by controlling the rotation controller 3, the optical pickup 4, and the laser drive circuit 9, for example, by means of the CPU 7a in accordance with a program stored in the ROM 7b.

The alternative information is managed for each information item (referred to as an "entry") as follows. A status 1 indicates that the entry is already replaced, an alternative destination is unused, or an alternative destination is nonusable. For example, when indicating that replacement is already done, the status 1 has a value of "0000" or "0001". When indicating that an alternative destination is unused, the status 1 has a value of "0010". When indicating that an alternative destination is nonusable, the status 1 has a value of "0011". When the status 1 indicates that an alternative destination is unused or nonusable (i.e., when the status 1 has a value of "0010" or "0011"), the address is set to the above-mentioned alternative destination address (alternative destination block number). On this occasion, an address to be replaced (defect block number) is not used. It should be noted that each alternative destination address is given in advance.

A status 2 indicates whether data are written in an alternative destination. For example, when data are written in an alternative destination (in this case, the status 1 has a value of "0000"), the status 2 has a value of "00xx". When data are not written in an alternative destination (in this case, status 1 has a value of "0001"), the status 2 has a value of "00x0". When only an alternative destination is assigned, and data are not written in the alternative destination (i.e., "0001" is input to the status 1 and "00x0" is input to the status 2), the data of an address to be replaced must be read by compulsion. In addition, when the status 1 indicates that an alternative destination is unused or nonusable (i.e., in the case of "0010" or "0011"), the status 2 has a value of "0000" in each case.

A description is given below of processes according to the present invention in the information recording/reproducing apparatus 100.

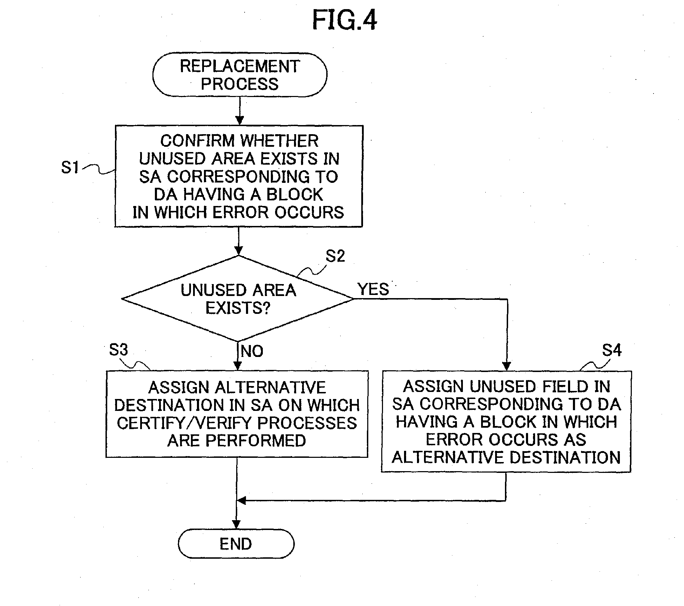

FIG. 4 is a flow chart showing a first process according to the present invention in the information recording/reproducing apparatus 100 shown in FIG. 1.

The first process shown in FIG. 4 is carried out by controlling each part of the information recording/reproducing apparatus 100 by means of the CPU 7a in accordance with a control program stored in the ROM 7b. The first process is controlled by the drive controller 7 (mainly, the CPU 7a). When performing a replacement process, it is confirmed in step S1 whether an unused field exists in an SA corresponding to a DA having a block (error block) in which an error occurs. In step S2, whether an unused field exists is determined. When an unused field exits (YES in step S2), the process proceeds to step S4. In step S4, the SA having the unused field is assigned as the alternative area having the alternative destination corresponding to the DA having the error block, and the process ends.

On the other hand, when it is determined in step S2 that an unused field does not exist (NO in step S2), the process proceeds to step S3. In step S3, an SA on which the certify process and the verify process are completed is assigned as the alternative area of the alternative destination corresponding to the DA having the error block, and the process ends.

That is, the CPU 7a reads alternative information (management table) from the MTA or the STA, and stores the information in the RAM 7c. Thereafter, when an error such as a seek error or servo shift occurs at the time of a format process or a recording process of user data, the CPU 7a confirms whether an unused field exists in an SA (= SA2) corresponding to a DA (here, a DA2 is assumed) having a block in which the error occurs (step S1). This confirmation is performed by detecting by the CPU 7a whether there is the status 1 having a value of "0010" among the management tables stored in the RAM 7c and corresponding to the SA2 (step S2) .

When the CPU 7a determines that there is no unused field in the SA2 (i.e., when, in alternative information with respect to the SA2, the status 1 having a value of "0010" is not detected)(No in step S2), if the format process is being performed, the CPU 7a detects "0010" that exists in the tables corresponding to the SA1, which is already subjected to the format process (subjected to the certify process and the verify process), and assigns the alternative destination to the field that is determined to be the unused field. Then, the status 1 of the corresponding part (corresponding to a part in the SA1) in the RAM 7c is updated from "0010" to "0000" (when the format process is the certify process) or to "0001" (when the format process is the verify process), and the number of the error block is registered as a defect block number.

On the other hand, if user data are being recorded, the CPU 7a detects "0010" that exists in the tables corresponding to the SA1 that is already subjected to the format process (already subjected to the certify process and the verify process), assigns a field that is determined to be an unused field as the alternative destination, and records, in the block in the SA1 corresponding to the alternative destination block number, the user data that are to be recorded in the error block. Then, in step S3, the CPU 7a updates the status 1 of the corresponding part (corresponding to a part in the SA1) in the RAM 7c to "0000" from "0010", and registers the number of the error block as a defect block number, and this alternation process ends.

On the other hand, when the CPU 7a determines that an unused field exists in the SA2 (i.e., when there is the status 1 having a value of "0010" in alternative information with respect to the SA2)(YES in step S2), if the format process is being performed, the field determined to be the unused field in the SA2 is assigned as the alternative destination. The CPU 7a updates the status 1 of the corresponding part in the RAM 7c from "0010" to "0000" (when the format process at the time of occurrence of the error is the certify process) or "0001" (when the format process at the time of occurrence of the error is the verify process), and registers the number of the error block as a defect block number.

When user data are being recorded, "0010" that exists in tables corresponding to the SA2 is detected, the field determined to be the unused field is assigned as the alternative destination, and the user data to be recorded in the error block are recorded in a block in the SA2 corresponding to the alternative destination block number. The status 1 of the corresponding part (corresponding to an part in the SA2) in the RAM 7c is updated from "0010" to "0000", and the number of the error block is registered as a defect block number (step S4), and this alternation process ends.

The CPU 7a specifies a block in which an error occurs (error block) by, during the certify process or recording of user data, obtaining address information at the time when the error occurs or immediately before the error occurs from address information recorded in advance at the time of fabrication of the disk, and performing an arithmetic operation by using the obtained address information. The block may be specified by counting the block number of the block to which writing is being performed.

During the verify process, the CPU 7a specifies an error block by obtaining address information recorded in the subcode or header of user data recorded at the time when the error occurs or immediately before the error occurs or address information recorded in advance at the time of fabrication of the disk, and performing an arithmetic operation by using the obtained address information. The block may be specified by counting the block number that is being read. In addition, after the format process ends, alternative information is updated by recording the alternative information in the CPU 7a or the RAM 7c to the MTA and the STA. In the aforementioned manner, since the alternative area to which the certify process or the verify process is already performed is assigned as the alternative destination, a process for replacing the alternative destination again does not occur. Hence, it is possible to prevent reduction in the format process speed.

A description is given below of a second process according to the present invention in the information recording/reproducing apparatus 100. In the above-mentioned process, when an error occurs before the certify process or the verify process proceeds to a predetermined extent, there is a probability that no SA to which the certify process or the verify process is completed exists. Thus, the second process according to the present invention prevents such a case from occurring.

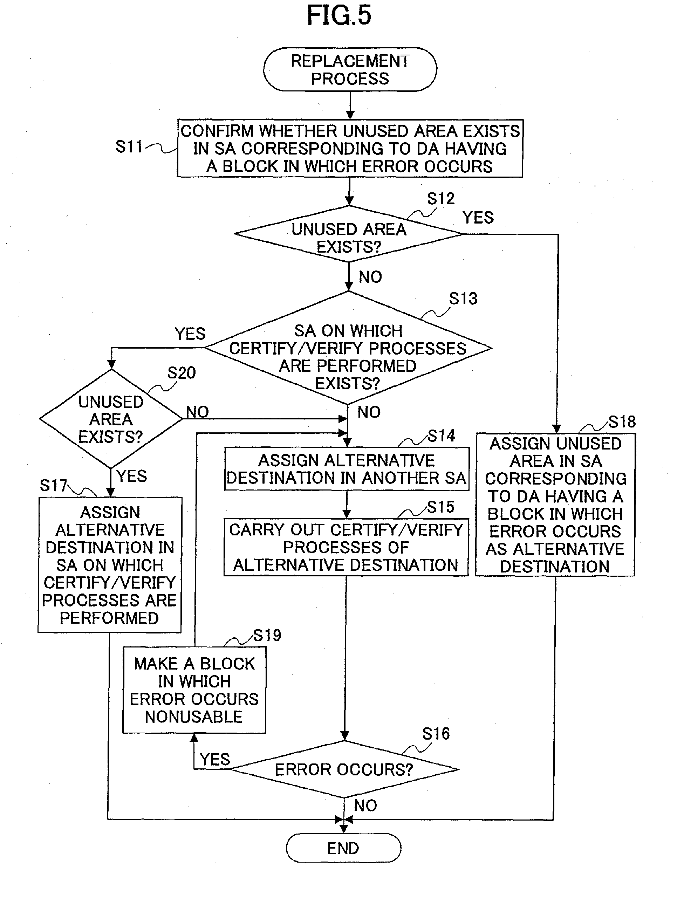

FIG. 5 is a flow chart showing the second process (replacement process) according to the present invention in the information recording/reproducing apparatus 100 shown in FIG. 1. The second process shown in the flow chart is carried out by the CPU 7a by controlling each part of the information recording/reproducing apparatus 100 in accordance with a control program stored in the ROM 7b. The second process is controlled by the drive controller 7. When performing the replacement process, in step S11, whether an unused field exists in an SA corresponding to a DA of a block in which an error occurs is confirmed. In step S12, whether an unused field exists is determined. When the unused field exists (YES in step S12), the process proceeds to step S18. In step S18, the SA having the unused field is assigned as the alternative area of the alternative destination corresponding to the DA having the error block, and the process ends.

When an unused field does not exist (NO in step S12), the process proceeds to step S13. In step S13, it is determined whether an SA exists on which the certify process and the verify process are completed. When an SA exists to which the certify process and the verify process are completed (YES in step S13), the process proceeds to step S20. In step S20, whether an unused field exists is determined. When the decision result in step S20 is NO, the process proceeds to step S14. When the decision result in step S20 is YES, the process proceeds to step S17. In step S17, the SA to which the certify process and the verify process are completed is assigned as the alternative area of the alternative destination corresponding to the DA of the error block, and the process ends.

When it is determined in step S13 that an SA does not exists to which the certify process and the verify process are completed (NO in step S13), the process proceeds to step S14. In step S14, another SA is assigned as the alternative destination. In step S15, the certify process and the verify process are performed on the other SA that is assigned as the alternative destination, and the process proceeds to step S16. In step S16, whether an error occurs is determined. When an error occurs (YES in step S16), the error block is made nonusable in step S19. Then, the process returns to step S14, and still another SA is assigned as the alternative destination. Steps S14, S15, S16, and S19 are repeated until the decision result in step S16 becomes NO. When an error does not occur in step S16 (NO in step S16), the process ends. That is, the CPU 7a reads alternative information (management table) from the MTA or the STA, and stores the information in the RAM 7c.

Then, during the format process or the recording process of user data, when an error occurs such as a seek error or servo shift, the CPU 7a confirms in step S11 whether an unused field exists in an SA (= SA2) corresponding to a DA (here, DA2) of a block in which the error occurs. This confirmation is carried out by detecting by the CPU 7a whether status 1 having "0010" exists in management tables stored in the RAM 7c and corresponding to the SA2.

When the CPU 7a determines that an unused field does not exist in the SA2 (i.e., when status 1 having "0010" cannot be detected in alternative information with respect to the SA2)(NO in step S12), the CPU 7a determines in step S13 whether, other than the SA2, an SA exists to which the format process (the certify process and the verify process) is completed by referring to a last written address LWA (that represents to which from the inner tracks of a disk the certify process is performed) or a last verified address LVA (that represents to which from the inner tracks of a disk the verify process is performed), which are management information items, in a main information packet (MIP) in the lead-in area. The confirmation may be made based on the LWA or the LVA read in advance and stored in the RAM 7c.

When, other than the SA2, an SA does not exist in which the format process is completed, the CPU 7a assigns, in step S14, as the alternative destination a predetermined field (a predetermined block: a first block for replacement in an SA3, for example) that is not made nonusable in another SA (the SA3, for example) to which the format process is not performed, and performs the certify process and the verify process on the block of the alternative destination in step S15. In step S14, status 1 of management information corresponding to the alternative destination block is set to "0000" (in the case of an error during the certify process or recording of user data) or "0001" (in the case of an error during the verify process in the format process), and the block number corresponding to the error block is registered as a defect block number.

In step S16, if an error such as a seek error or servo shift does not occur when performing the certify process or the verify process on the alternative destination block (NO in step S16), this replacement process ends. In the case of an error at the time of recording of user data, when the certify process and the verify process are normally performed in step S16 (NO in step S16), user data to be recorded in the error block are recorded in the alternative destination block. On the other hand, when an error such as a seek error or servo shift occurs when performing the certify process or the verify process on the alternative destination block (YES in step S16), the CPU 7a makes the alternative destination block in which the error occurs nonusable. Hence, in step S19, status 1 stored in the RAM 7c and having the number of the block as the alternative destination block number is set to "0011".

Then, the process returns to step S14, and another predetermined block that is not nonusable (the block next to the block that is made nonusable, for example) is assigned as the alternative destination. Steps S14, S15, S16, and S19 are repeated until an error does not occur in step S16. In step S13, when an SA (the SA1, for example) to which the format process is already performed (the certify process or the verify process are already performed) exists (YES in step S13), it is confirmed in step S20 whether an unused field exists in the SA1. This confirmation is performed based on whether status 1 having "0010" exists in management information corresponding to the SA1. In step S20, when the CPU 7a determines that an unused field does not exist in the SA1 (NO in step S20), steps S14 and the subsequent steps are performed.

On the other hand, when the CPU 7a determines in step S20 that an unused field exists (YES in step S20), the process proceeds to step S17. In step S17, the CPU 7a detects "0010" that exists in a table corresponding to the SA1, and assigns the field determined to be the unused field as the alternative destination. The status 1 of the corresponding part (corresponding to an part in the SA1) in the RAM 7c is updated from "0010" to "0000" (in the case of an error during the certify process or recording of user data) or "0001" (in the case of an error during the verify process in the format process), and the number of the error block is registered as a defect block number. In the case of an error during recording of user data, the user data to be recorded in the error block are recorded in the alternative destination block. Then, this replacement process ends.

On the other hand, when the CPU 7a determines in step S12 that an unused field exists in the SA2 (i.e., when there is status 1 having "0010" in alternative information with respect to the SA2) (YES in step S12), the process proceeds to step S18. In step S18, the field determined to be the unused field in the SA2 is assigned as the alternative destination. Status 1 of the corresponding part in the RAM 7c is updated from "0010" to "0000" (in the case of an error during the certify process or recording of user data) or "0001" (in the case of an error during the verify process in the format process), and the number of the error block is registered as a defect block number.

When the error occurs during recording of the user data, the user data to be recorded in the error block are recorded in the alternative destination block (step S18). Then, this replacement process ends. The CPU 7a specifies the block in which the error occurs by, during the certify process or recording of the user data, obtaining address information at the time when the error occurs or immediately before the error occurs from address information that is recorded in advance at the time of fabrication of the disk, and performing an arithmetic operation by using the obtained address information. The block may be specified by counting the block number of the block to which writing is being performed.

In the verify process, the error block is specified by obtaining address information recorded in the subcode or the header of the user data that are recorded at the time when the error occurs or immediately before the error occurs, or address information recorded in advance at the time of fabrication of the disk, and performing an arithmetic operation by using the obtained address information. After the format process ends, the CPU 7a updates alternative information by recording alternative information in the RAM 7c in the MTA and the STA.

In this embodiment, the description is given of the case where only the SA1 exists in step S20 as an SA that is already formatted. However, this is not a limitation, and there may be a plurality of SAs that are already formatted. In this case, in step S20, it is determined whether an unused field exists in the SAs. In the aforementioned manner, when the field to which the certify process or the verify process is not performed is assigned as the alternative destination, the certify process and the verify process are performed thereon. Hence, a field assigned as the alternative destination is not replaced in the subsequent format process.

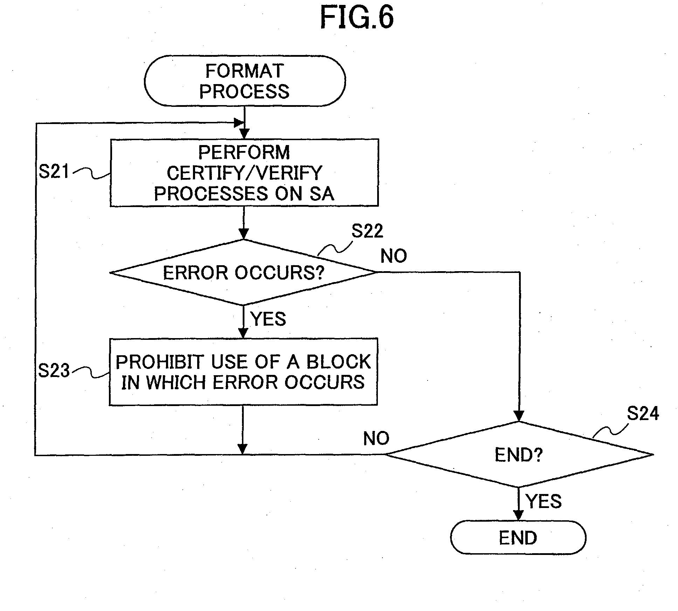

A description is given below of a third process according to the present invention in the information recording/reproducing apparatus 100. FIG. 6 is a flow chart showing the third process according to the present invention in the information recording/reproducing apparatus 100 shown in FIG. 1. The third process shown in the flow chart is carried out by the CPU 7a by controlling each part of the information recording/reproducing apparatus 100 in accordance with a control program stored in the ROM 7b. The third process is controlled by the drive controller 7. When performing the format process, the certify process or the verify process is performed on an SA in step S21 before performing the certify process or the verify process on a DA, and the process proceeds to step S22. In step S22, whether an error occurs is determined.

When it is determined in step S22 that an error occurs (YES in step S22), the process proceeds to step S23. In step S23, the block in which the error occurs is set nonusable, and the process returns to step S21. Steps S21 through 23 are repeated until the decision result in step S22 becomes NO. When it is determined in step S22 that an error does not occur (NO in step S22), the process proceeds to step S24. In step S24, it is determined whether the certify process and the verify process of the SA are completed. When the decision result in step S24 is NO, the process returns to step S21. When the certify process and the verify process of the SA are completed (YES in step 524) , this format process ends.

That is, upon reception of a predetermined format instruction from the host computer 11, the CPU 7a moves an optical spot to a start position of a predetermined SA (the SA2, for example) based on obtained address information, and starts the certify process and the verify process (step S21). When an error does not occur during the format process (NO in step S22), the CPU 7a determines in step S24 whether the format process ends with respect to the SA2, which is the format target, based on the obtained address information. When it is determined that the format process on the SA2 ends (i.e., when the format process is performed until the last position of the SA2, which is the format target)(YES in step S24), this process ends.

On the other hand, when it is determined in step S22 that an error occurs (YES in step S22), the process proceeds to step S23. In step S23, the CPU 7a specifies an error block and sets, to "0011", status 1 of alternative information having the error block as the alternative destination block among alternative information stored in the RAM 7c. It should be noted that the error block is specified in the same manner as the aforementioned manner. The CPU 7a repeats steps S21 through S24 until the format process ends with respect to the entire SA2, which is the format target. In this embodiment, it is assumed that the SA2 is the format target SA. However, this is not a limitation, and a plurality of SAs may be format targets and steps S21 through S24 may be performed thereon. In this case, the process ends at the time when the format process is performed on all of the format targets.

The format process may be performed on a DA subsequently after the above-mentioned process ends. After the process, updated alternative information stored in the RAM 7c is recorded in the MTA and the STA at an arbitrary timing. In the aforementioned manner, the certify process and the verify process are performed on an SA in advance, and the position at which an error occurs is made nonusable. Hence, a field assigned as the alternative destination is not replaced in the subsequent format process.

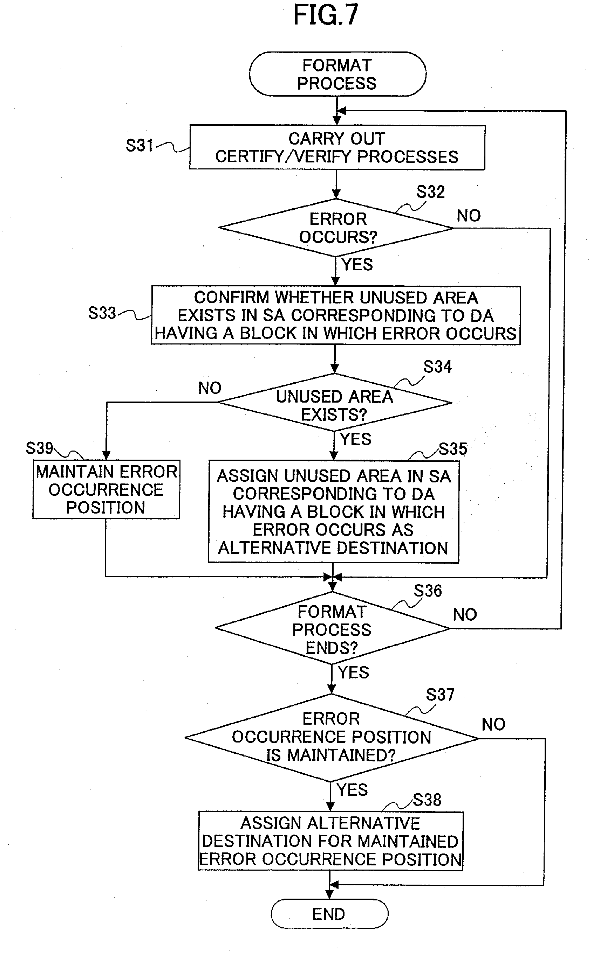

A description is given below of a fourth process according to the present invention in the information recording/reproducing apparatus 100. FIG. 7 is a flow chart showing the fourth process according to the present invention in the information recording/reproducing apparatus 100 shown in FIG. 1. The fourth process shown in the flow chart is carried out by the CPU 7a by controlling each part of the information recording/reproducing apparatus 100 in accordance with a control program stored in the ROM 7b. The fourth process is controlled by the drive controller 7. In the fourth process (format process), the certify process and the verify process are performed in step S31, and the process proceeds to step S32. In step S32, it is determined whether an error occurs when carrying out the certify process and the verify process. When an error does not occur (NO in step S32), the process directly proceeds to step S36. When an error occurs (YES in step S32), the process proceeds to step S33. In step S33, it is confirmed whether an unused field exists in an SA corresponding to the DA having the block in which the error occurs. In step S34, whether an unused field exists is determined.

When it is determined in step S34 that an unused field does not exist (NO in step S34), the process proceeds to step S39. In step S39, information (error occurrence position information: an address, for example) of the position at which the error occurs is maintained (in the RAM 7c of the drive controller 7, for example), and the process proceeds to step S36. When an unused field exists (YES in step S34), the process proceeds to step S35. In step S35, the SA having the unused field is assigned as the alternative area of the alternative destination corresponding to the DA having the error block, and the process proceeds to step S36.

In step S36, it is determined whether the format process of all areas (i.e., the DAs and the SAs) ends. When the format process does not end (NO in step S36), the process returns to step S31, and steps S31 through S36 are repeated. When the format process of all areas ends (YES in step S36), the process proceeds to step S37. In step S37, it is determined whether information (error occurrence position information) of the position at which the error occurs is maintained. When the error occurrence position information is not maintained (NO in step S37), this format process directly ends. When the error occurrence position information is maintained (YES in step S37), the process proceeds to step S38. In step S38, the alternative destination is assigned from the SA to the maintained error occurrence position, and the format process ends. That is, the CPU 7a reads alternative information (management table) from the MTA or the STA, and stores the information in the RAM 7c.

Upon reception of a format instruction from the host computer 11, the CPU 7a carries out the certify process and the verify process in step S31. When an error is detected in the middle of the certify process and the verify process (YES in step S32), the CPU 7a confirms in step S33 whether an unused field exists in an SA (= SA2) corresponding to a DA (here, the DA2) having the block. This confirmation is performed by detecting by the CPU 7a whether there is status 1 having "0010" in management tables stored in the RAM 7c and corresponding to the SA2 (step S34) .

When it is determined that an unused field exists in the SA2 (i.e., when there is status 1 having "0010" in alternative information with respect to the SA2)(YES in step S34), the process proceeds to step S35. In step S35, the field determined to be the unused field in the SA2 is assigned as the alternative destination. The status 1 of the corresponding part in the RAM 7c is updated from "0010" to "0000" (in the case where the format process at the time when the error occurs is the certify process) or "0001" (in the case where the format process at the time when the error occurs is the verify process), and the number of the error block is registered as a defect block number. In step S36, the CPU 7a determines whether the format process ends based on obtained address information.

On the other hand, when it is not determined in step S34 that an unused field exists in the SA2 (NO in step S34), information relating to the position at which the error occurs is maintained in the RAM 7c in step S39. The position at which the error occurs is specified in the aforementioned manner. Address information or the numbers of data blocks may be maintained. Then, the process proceeds to step S36. When it is determined in step S32 that an error does not occur (NO in step S32), the process proceeds to step S36. When it is determined in step S36 that the format process does not end (NO in step S36), the process returns to step S31.

On the other hand, when it is determined in step S36 that the format process ends (YES in step S36), the CPU 7a determines in step S37 whether information relating to the position (error occurrence position) where the error occurs is maintained in the RAM 7c. When information relating to the error occurrence position is not maintained (NO in step S37), the format process ends. When it is determined that the error occurrence position is maintained (YES in step S37), in step S38, taking the blocks corresponding to the error occurrence positions as defect blocks, all alternative destinations are assigned in desired SAs, and alternative information is created or updated. After the update, alternative information in the RAM 7c is recorded in the MTA or the STA at an arbitrary timing.

In the aforementioned manner, since the alternative destination is assigned after performing the certify process and the verify process on an SA, a process does not occur that replaces the alternative destination again. Hence, it is possible to prevent reduction in the format process speed.

As mentioned above, the information recording/reproducing apparatus 100 shown in FIG. 1 can perform all of the operations shown in FIGS. 4 through 7. In all of the above-mentioned embodiments, the description is given in accordance with the Mount Rainier standard that uses a CD-RW disk as the optical disk 1. However, this is not a limitation, and similar operations may be performed by using a DVD+RW disk or the like as the optical disk 1.

The information recording/reproducing apparatus, program, computer-readable recording medium, and defect field management method according to the present invention may be applied to personal computers such as desktop personal computers, and notebook computers.

The present invention is not limited to the specifically disclosed embodiments, and variations and modifications may be made without departing from the scope of the present invention.

## Claims

1. An information recording/reproducing apparatus that performs reading and writing of information with respect to an information recording medium in which user data areas and alternative areas are alternately arranged, said apparatus **characterized by** comprising:
means for assigning, when an error occurs in a certify process or a verify process with respect to one of the user data areas and an alternative destination is to be assigned, in the case where an unused field does not exist in the alternative area corresponding to the user data area in which the error occurs, the alternative destination in another alternative area on which the certify process or the verify process is performed.

2. The information recording/reproducing apparatus as claimed in claim 1, **characterized by** further comprising:
means for performing, when the error occurs in the certify process or the verify process and the alternative destination is to be assigned, in the case where the certify process and the verify process are not performed on the alternative area having the alternative destination, the certify process and the verify process on the alternative area having the alternative destination; and
means for assigning, when an error occurs in the certify process or the verify process performed by said means for performing the certify process and the verify process, the alternative destination in an alternative area other than the alternative area in which the error occurs.

3. The information recording/reproducing apparatus as claimed in claim 1, **characterized by** further comprising:
means for performing the certify process and the verify process on the alternative area first before the user data area; and
means for registering, as a position the use of which is prohibited, a position in the alternative area at which position an error occurs in the certify process or the verify process performed by means for performing the certify process and the verify process.

4. The information recording/reproducing apparatus as claimed in claim 1, **characterized by** further comprising:
means for maintaining a position at which the error occurs when the certify process or the verify process is performed on the one of the user data areas; and
means for assigning, after the certify process and the verify process are performed on the alternative area, the alternative destination with respect to the user data area having the maintained position.

5. An information recording/reproducing apparatus that performs recording and reproducing of information with respect to a recording medium having a plurality of user data areas for recording user data therein and a plurality of alternative areas corresponding to the respective user data areas and each having an alternative field for replacing a defect field in the user data areas, said apparatus **characterized by** comprising:
a defect field detection part that detects a defect field at the time of a format process or recording of information;
a first usable field determination part that determines whether an alternative field allowing replacement exists in the alternative area corresponding to the user data area having the defect field detected by said defect field detection part; and
a first alternative field assigning part that assigns, when said first usable field determination part determines that the alternative field does not exist, as an alternative field for the defect field, an alternative field allowing replacement in another alternative area to which the format process is performed.

6. The information recording/reproducing apparatus as claimed in claim 5, **characterized by** further comprising:
a formatted alternative area determination part that determines whether an alternative area exists on which the format process is performed;
a second alternative field assigning part that assigns, when said formatted alternative area determination part determines that an alternative area does not exist on which area the format process is performed, a predetermined alternative field in an alternative area on which the format process is not performed as an alternative field for the defect field; and
an alternative field format process part that performs the format process on the alternative field assigned by said second alternative field assigning part.

7. The information recording/reproducing apparatus as claimed in claim 6, **characterized by** further comprising:
a use prohibition part that, when the defect detection part detects an alternative field on which the format process is performed by the alternative field format process part as a defect field, prohibits use of the defect field,
wherein the second alternative field assigning part assigns, as an alternative field for the defect field, another alternative field in the alternative area including the alternative field the use of which is prohibited by said use prohibition part.

8. The information recording/reproducing apparatus as claimed in claim 6, **characterized by** further comprising:
a second usable field determination part that determines, when the formatted alternative area determination part determines that an alternative area exists on which the format process is performed, whether an alternative field allowing replacement exists in the alternative area on which the format process is performed,
wherein, when the second usable field determination part determines that an alternative field allowing replacement does not exist, the second alternative field assigning part assigns, as an alternative field for the defect field, a predetermined field in an alternative area on which the format process is not performed.

9. The information recording/reproducing apparatus as claimed in claim 7, **characterized by** further comprising:
a second usable field determination part that determines, when the formatted alternative area determination part determines that an alternative area exists on which the format process is performed, whether an alternative field allowing replacement exists in the alternative area on which the format process is performed,
wherein, when the second usable field determination part determines that an alternative field allowing replacement does not exist, the second alternative field assigning part assigns, as an alternative field for the defect field, a predetermined field in an alternative area on which the format process is not performed.

10. An information recording/reproducing apparatus that performs recording and reproducing of information with respect to a recording medium having a plurality of user data areas for recording user data therein and a plurality of alternative areas corresponding to the respective user data areas and each having an alternative field for replacing a defect field in the user data areas, said apparatus **characterized by** comprising:
an alternative area format process part that performs a format process on the alternative areas separately from the user data areas;
a defect field detection part that detects a defect field existing in the alternative area at the time of the format process by said alternative area format process part; and
a use prohibition part that prohibits, when the defect field is detected by said defect field detection part, using the defect field as the alternative field.

11. An information recording/reproducing apparatus that performs recording and reproducing of information with respect to a recording medium having a plurality of user data areas for recording user data therein and a plurality of alternative areas corresponding to the respective user data areas and each having an alternative field for replacing a defect field in the user data areas, said apparatus **characterized by** comprising:
an error detection part that detects an error that occurs at the time of a format process;
a usable field determination part that determines whether a field allowing replacement exists in the alternative area corresponding to the user data area in which the error detected by said error detection part occurs;
an error occurrence position information maintaining part that maintains, when said usable field determination part determines that the field allowing replacement does not exist, information relating to a position at which the error occurs; and
an alternative field assigning part that assigns, after the format process ends, an alternative field for replacing the defect field based on the information maintained by said error occurrence position information maintaining part.

12. A program **characterized by** causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
a defect field detection procedure that detects the defect field at the time of recording of information or a format process;
a first usable field determination procedure that determines whether an alternative field allowing replacement exists in the alternative area corresponding to the user data area having the defect field detected in said defect field detection procedure; and
a first alternative field assigning procedure that assigns, when said first usable field determination procedure determines that the alternative field does not exist, an alternative field allowing replacement in another alternative area to which the format process is performed as an alternative field for the defect field.

13. A program **characterized by** causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
an alternative area format process procedure that performs a format process on the alternative areas separately from the user data areas;
a defect field detection procedure that detects, at the time of the format process in said alternative area format process procedure, a defect field existing in the alternative areas; and
a use prohibition procedure that prohibits, when the defect field is detected in said defect field detection procedure, use of the defect field as an alternative field.

14. A program **characterized by** causing a computer to carry out:
a procedure that performs recording and reproducing of information with respect to a recording medium having a plurality of user data areas for recording user data therein and a plurality of alternative areas corresponding to the respective user data and each having an alternative field for replacing a defect field in the user data areas;
an error detection procedure that detects an error that occurs at the time of a format process;
a usable field determination procedure that determines whether an alternative field allowing replacement exists in the alternative area corresponding to the user data area in which the error detected in said error detection procedure occurs;
an error occurrence position information maintaining procedure that maintains, when said usable field determination procedure determines that the alternative area does not exist, information relating to a position at which the error occurs; and
an alternative area assigning procedure that assigns, after the format process ends, an alternative field for replacing the detect field based on the information maintained in said error occurrence position information maintaining procedure.

15. A computer-readable recording medium **characterized by** recording a program for causing a computer to carry out;
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
a defect field detection procedure that detects the defect field at the time of recording of information or a format process;
a first usable field determination procedure that determines whether an alternative field allowing replacement exists in the alternative area corresponding to the user data area having the defect field detected in said defect field detection procedure; and
a first alternative field assigning procedure that assigns, when said first usable field determination procedure determines that the alternative field does not exist, an alternative field allowing replacement in another alternative area to which the format process is performed as an alternative field for the defect field.

16. A computer-readable recording medium **characterized by** recording a program for causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
an alternative area format process procedure that performs a format process on the alternative areas separately from the user data areas;
a defect field detection procedure that detects, at the time of the format process in said alternative area format process procedure, a defect field existing in the alternative areas; and
a use prohibition procedure that prohibits, when the defect field is detected in said defect field detection procedure, use of the defect field as an alternative field.

17. A computer-readable recording medium **characterized by** recording a program for causing a computer to carry out:
a procedure that performs recording and reproducing of information with respect to a recording medium having a plurality of user data areas for recording user data therein and a plurality of alternative areas corresponding to the respective user data areas and each having an alternative field for replacing a defect field in the user data areas;
an error detection procedure that detects an error that occurs at the time of a format process;
a usable field determination procedure that determines whether an alternative field allowing replacement exists in the alternative area corresponding to the user data area in which the error detected in said error detection procedure occurs;
an error occurrence position information maintaining procedure that maintains, when said usable field determination procedure determines that the alternative area does not exist, information relating to a position at which the error occurs; and
an alternative area assigning procedure that assigns, after the format process ends, an alternative field for replacing the detect field based on the information maintained in said error occurrence position information maintaining procedure.

18. A defect field management method of managing an alternative field with respect to a recording medium having a plurality of user data areas for recording user data therein and a plurality of alternative areas corresponding to the respective user data areas and each having an alternative field for replacing the defect field in the user data areas, said method **characterized by** comprising the steps of:
detecting the defect field at the time of recording of information or a format process;
determining whether an alternative field allowing replacement exists in the alternative area corresponding to the user data area having the detected defect field; and
assigning, when said step of determining determines that the alternative field allowing replacement does not exist, an alternative field allowing replacement in another alternative area on which the format process is performed as an alternative field for the defect field.

19. A defect field management method of managing an alternative field with respect to a recording medium having a plurality of user data areas for recording user data therein and a plurality of alternative areas corresponding to the respective user data areas and each having an alternative field for replacing the defect field in the user data areas, said method **characterized by** comprising the steps of:
performing a format process on the alternative areas separately from the user data areas;
detecting, at the time of the format process in said step of performing the format process, a defect field existing in the alternative areas; and
prohibiting use of the detected defect field as the alternative field.

20. A defect field management method of managing an alternative field with respect to a recording medium having a plurality of user data areas for recording user data therein and a plurality of alternative areas corresponding to the respective user data areas and each having an alternative field for replacing the defect field in the user data areas, said method **characterized by** comprising the steps of:
detecting an error that occurs at the time of a format process;
determining whether an alternative field allowing replacement exists in the alternative area corresponding to the user data area in which the detected error occurs;
maintaining, when the step of determining determines that the alternative field allowing replacement does not exist, information relating to a position at which the error occurs; and
assigning, after the format process ends, an alternative field for replacing the defect field based on the information maintained in the step of maintaining the information.
